# EUROPEAN PATENT APPLICATION

(11) **EP 4 411 851 A1**
(43) Date of publication of application: **07.08.2024**
(21) Application number: 22875461.0
(22) Date of filing: 07.06.2022
(51) Int. Cl.: H01M 4/13, H01M 4/36, H01M 4/505, H01M 4/525, H01M 4/62

(54) **POSITIVE ELECTRODE FOR SECONDARY BATTERY**

(30) Priority: 30.09.2021 JP 2021160852
(71) Applicant: Panasonic Intellectual Property Management Co., Ltd., Osaka-shi, Osaka 540-6207 (JP)
(72) Inventor: SAKAI, Masahiro, Kadoma-shi, Osaka 571-0057 (JP); SUZUKI, Hirotetsu, Kadoma-shi, Osaka 571-0057 (JP)
(74) Representative: Novagraaf International SA
(86) International application number: PCT/JP2022/022947
(87) International publication number: WO 2023/053582

(57) **Abstract**

Provided are: a high-density positive electrode capable of suppressing battery resistance; and a secondary battery using said positive electrode. A positive electrode for a secondary battery according to one aspect of the present disclosure has a positive electrode current collector and a positive electrode mixture layer provided on the surface of the positive electrode current collector, wherein: the positive electrode mixture layer includes n types of positive electrode active materials (n is an integer of 2 or more) and a low-hardness compound having a lower hardness than any of the n types of positive electrode active materials; and the content of the low-hardness component in the positive electrode mixture layer is more than 0.05 parts by mass and less than 1.00 parts by mass with respect to 100 parts by mass of the positive electrode active material.

## Description

### TECHNICAL FIELD

The present disclosure relates to a positive electrode for a secondary battery, and a secondary battery using the same.

### BACKGROUND ART

An electrode for a non-aqueous electrolyte secondary battery generally has a current collector which is made of a metal, and a mixture layer formed over a surface of the current collector. The mixture layer includes, in addition to an active material which is a primary component, a conductive agent or the like which interposes between the active materials and forms an electrically conductive path. Patent Literature 1 discloses a technique in which a clay mineral is contained in a negative electrode mixture layer, in order to improve wettability of electrolyte solution to the negative electrode.

### CITATION LIST

### PATENT LITERATURE

PATENT LITERATURE 1: Japanese Unexamined Patent Application Publication No. 2008-71757

### SUMMARY

### PROBLEM TO BE SOLVED

In recent years, higher density of the positive electrode mixture layer is demanded, for improving battery characteristics. In order to increase the density of the positive electrode mixture layer, for example, a linear pressure applied during rolling of the positive electrode may be increased. However, as a result of intensive studies of the present inventors, it was found that the density of the positive electrode mixture layer does not become greater than equal to a certain density even when the linear pressure during the rolling of the positive electrode is increased. Even when the positive electrode is rolled with a linear pressure exceeding this limit value, cracks are caused in the positive electrode active material, causing generation of a portion inside the positive electrode active material where the electrically conductive path cannot be formed and which thus does not contribute to the charging and discharging, which in turn results in an increase in the battery resistance. The technique of Patent Literature 1 does not take into consideration the influences of the clay mineral to the charging density of the positive electrode mixture layer.

An advantage of the present disclosure lies in provision of a positive electrode which is highly dense and which can suppress the battery resistance, and a secondary battery using the positive electrode.

### SOLUTION TO PROBLEM

According to one aspect of the present disclosure, there is provided a positive electrode for a secondary battery, including: a positive electrode current collector; and a positive electrode mixture layer provided over a surface of the positive electrode current collector, wherein the positive electrode mixture layer includes n types of positive electrode active materials (wherein n is an integer greater than or equal to 2), and a low-hardness compound having a lower hardness than any of the n types of the positive electrode active materials, and a content of the low-hardness compound in the positive electrode mixture layer is greater than 0.05 parts by mass and less than 1.00 parts by mass with respect to 100 parts by mass of the positive electrode active materials.

According to another aspect of the present disclosure, there is provided a secondary battery including: the positive electrode for the secondary battery described above; a separator; a negative electrode for a secondary battery that opposes the positive electrode for the secondary battery with the separator therebetween; and an electrolyte.

### ADVANTAGEOUS EFFECTS OF INVENTION

The positive electrode for secondary battery according to an aspect of the present disclosure includes a positive electrode mixture layer which is highly dense, and can suppress the battery resistance. The secondary battery according to an aspect of the present disclosure has superior battery characteristic.

### BRIEF DESCRIPTION OF DRAWINGS

FIG. 1 is a cross-sectional diagram of a non-aqueous electrolyte secondary battery according to an embodiment of the present disclosure.
FIG. 2 is a diagram showing a relationship between a filling density of a positive electrode mixture layer and elongation of a positive electrode during rolling.

### DESCRIPTION OF EMBODIMENTS

As described, increasing the density of the positive electrode mixture layer is an important problem in a secondary battery. The present inventors have intensively studied in order to solve this problem, and found that the higher density of the positive electrode mixture layer and the suppression of the electrical resistance can both be achieved by including, in the positive electrode mixture layer, two or more types of positive electrode active materials and a low-hardness compound having a lower hardness than any of these positive electrode active materials, and setting a content of the low-hardness compound in the positive electrode mixture layer in a predetermined range. It can be deduced that, when the positive electrode is rolled, because the low-hardness compound is present between the positive electrode active materials, the positive electrode active material can more easily move, and the crack of the positive electrode active material can be suppressed. This advantage is more significant when the positive electrode mixture layer includes n types of positive electrode active materials (wherein n is an integer greater than or equal to 2). For example, when the positive electrode mixture layer includes two or more types of positive electrode active materials having different average particle sizes, a number of contact points between the particles of the positive electrode active material is increased, and it becomes more difficult to roll the positive electrode mixture layer. Thus, the advantage of the low-hardness compound becomes more significant.

An electrode mixture for a battery, and a non-aqueous electrolyte secondary battery according to an embodiment of the present disclosure will now be described in detail with reference to the drawings. A selective combination of a plurality of embodiments and alternative configurations described below is contemplated from the beginning.

In the following, a circular cylindrical battery 10 in which an electrode assembly 14 of a wound type is housed in an outer housing can 16 of a circular cylindrical shape with a bottom is exemplified, but the outer housing is not limited to the outer housing can of the circular cylindrical shape, and may alternatively be, for example, a polygonal outer housing can (polygonal battery), a coin-shape outer housing can (coin-shape battery), or an outer housing formed from laminated sheets including a metal layer and a resin layer (laminated battery). In addition, the electrode assembly is not limited to the wound type, and may alternatively be a layered type electrode assembly in which a plurality of positive electrodes and a plurality of negative electrodes are alternately layered with separators therebetween. The positive electrode for the secondary battery according to the present disclosure may be applied to an aqueous electrolyte secondary battery which uses an aqueous electrolyte, but is particularly effective in a non-aqueous electrolyte secondary battery which uses a non-aqueous electrolyte.

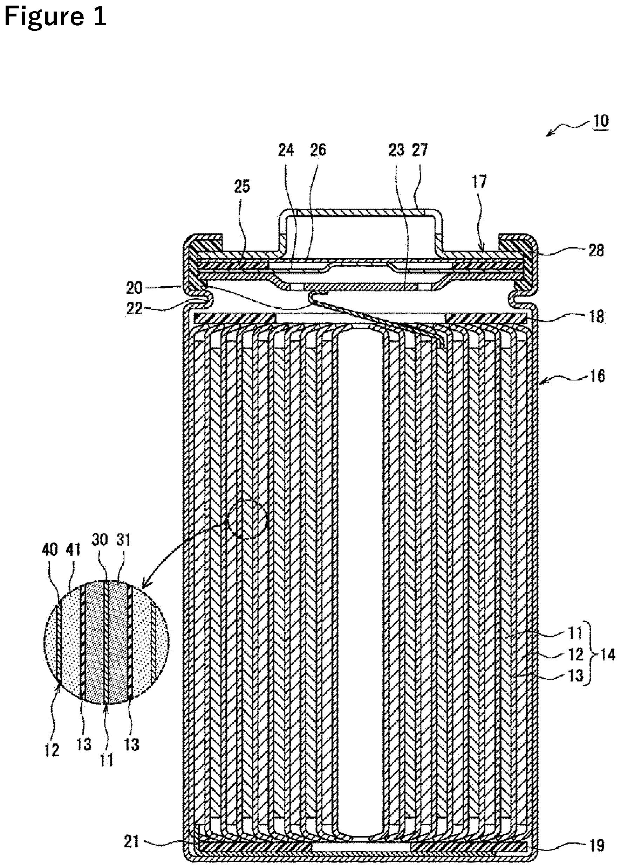

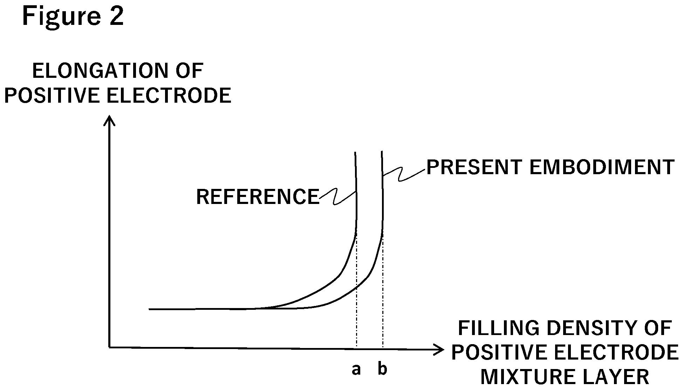

FIG. 1 is a cross-sectional diagram of a circular cylindrical battery 10 according to an embodiment of the present disclosure. As shown in FIG. 1, the circular cylindrical battery 10 includes an electrode assembly 14 of a wound type, a non-aqueous electrolyte, and an outer housing can 16 which houses the electrode assembly 14 and the non-aqueous electrolyte. The electrode assembly 14 includes a positive electrode 11, a negative electrode 12, and a separator 13, and has a wound type structure in which the positive electrode 11 and the negative electrode 12 are wound in a spiral shape with the separator 13 therebetween. The outer housing can 16 is a metal container having a circular cylindrical shape with a bottom and having one side in an axial direction opened, and the opening of the outer housing can 16 is blocked by a sealing assembly 17. In the following, for the convenience of the description, the side of the sealing assembly 17 of the battery will be referred to as an "upper side", and the side of the bottom of the outer housing can 16 will be referred to as a "lower side".

The non-aqueous electrolyte includes a non-aqueous solvent and an electrolyte salt dissolved in the non-aqueous solvent. For the non-aqueous solvent, for example, esters, ethers, nitriles, amides, or a mixture solvent of two or more of these solvents may be employed. The non-aqueous solvent may include a halogen-substituted product in which at least a part of hydrogens of the solvent described above is substituted with a halogen atom such as fluorine. Examples of the non-aqueous solvent include ethylene carbonate (EC), ethylmethyl carbonate (EMC), dimethyl carbonate (DMC), and a mixture solvent of these solvents. For the electrolyte salt, for example, a lithium salt such as LiPF₆ is employed. The non-aqueous electrolyte is not limited to a liquid electrolyte, and may alternatively be a solid electrolyte.

The positive electrode 11, the negative electrode 12, and the separator 13 forming the electrode assembly 14 are each a band-shaped, elongated member, and are wound in the spiral shape, so as to be alternately layered in a radial direction of the electrode assembly 14. The negative electrode 12 is formed in a size slightly larger than the positive electrode 11 in order to prevent precipitation of lithium. That is, the negative electrode 12 is formed to be longer in a longitudinal direction and in a width direction (short side direction) than the positive electrode 11. The separator 13 is formed in a size slightly larger at least than the positive electrode 11, and two separators 13 are placed, for example, to sandwich the positive electrode 11. The electrode assembly 14 includes a positive electrode lead 20 connected to the positive electrode 11 by welding or the like, and a negative electrode lead 21 connected to the negative electrode 12 by welding or the like.

Insulating plates 18 and 19 are placed respective above and below the electrode assembly 14. In the illustrated example structure of FIG. 1, the positive electrode lead 20 extends through a through hole of the insulating plate 18 toward the side of the sealing assembly 17, and the negative electrode lead 21 extends to the side of the bottom of the outer housing can 16 through an outer side of the insulating plate 19. The positive electrode lead 20 is connected to a lower surface of an internal terminal plate 23 of the sealing assembly 17 by welding or the like, and a cap 27 which is a top plate of the sealing assembly 17 electrically connected to the internal terminal plate 23 serves as a positive electrode terminal. The negative electrode lead 21 is connected to an inner surface of the bottom of the outer housing can 16 by welding or the like, and the outer housing can 16 serves as a negative electrode terminal.

A gasket 28 is provided between the outer housing can 16 and the sealing assembly 17, so as to secure airtightness inside the battery. The outer housing can 16 has a groove portion 22 in which a part of a side surface portion is projected toward an inner side, and which supports the sealing assembly 17. The groove portion 22 is desirably formed in an annular shape along a circumferential direction of the outer housing can 16, and supports the sealing assembly 17 with the upper surface thereof. The sealing assembly 17 is fixed at an upper part of the outer housing can 16 by the groove portion 22 and an opening end of the outer housing can 16 crimped with respect to the sealing assembly 17.

The sealing assembly 17 has a structure in which the internal terminal plate 23, a lower vent member 24, an insulating member 25, an upper vent member 26, and the cap 27 are layered in this order from the side of the electrode assembly 14. The members of the sealing assembly 17 have, for example, a circular disk shape or a ring shape, and members other than the insulating member 25 are electrically connected to each other. The lower vent member 24 and the upper vent member 26 are connected to each other at respective center parts, and the insulating member 25 interposes between peripheral parts of the vent members. When an internal pressure of the battery increases due to abnormal heat generation, the lower vent member 24 deforms to press the upper vent member 26 upward toward the cap 27 and ruptures, and a current path between the lower vent member 24 and the upper vent member 26 is shut out. When the internal pressure further increases, the upper vent member 26 ruptures, and gas is discharged from an opening of the cap 27.

The positive electrode 11, the negative electrode 12, and the separator 13 forming the electrode assembly 14, in particular, the positive electrode 11, will now be described in detail.

### [Positive Electrode]

The positive electrode 11 includes a positive electrode current collector 30, and a positive electrode mixture layer 31 provided over a surface of the positive electrode current collector 30. For the positive electrode current collector 30, there may be employed a foil of a metal which is stable within a potential range of the positive electrode 11 such as aluminum and an aluminum alloy, a film on a surface layer of which the metal is placed, or the like. The positive electrode mixture layer 31 is desirably provided over both surfaces of the positive electrode current collector 30.

The positive electrode mixture layer 31 include n types of positive electrode active materials (wherein n is an integer greater than or equal to 2), and a low-hardness compound having a lower hardness than any of the n types of the positive electrode active materials. With this configuration, a positive electrode can be obtained having a high density and which can suppress the battery resistance.

A parameter for classifying the positive electrode active materials into n types is, for example, an average particle size. That is, the number of types of the average particle sizes of the n types of the positive electrode active materials may be two or more. In the present disclosure, the average particle size means a volume-based median size (D50). D50 means a particle size at which an accumulation of frequencies in a volume-based granularity distribution reaches 50% from the lower side, and is also called a middle size. The granularity distribution of the positive electrode active material can be measured using a granularity distribution measurement apparatus of a laser diffraction type (for example, MT3000II manufactured by MicrotracBEL corporation), and using water as a dispersive medium.

A minimum particle size Dₘᵢₙ of the n types of the positive electrode active materials may be 0.1 µm~10 µm, and a maximum average particle size Dₘₐₓ of the n types of positive electrode active materials may be two times Dₘᵢₙ or greater. With this configuration, a filling density of the positive electrode mixture layer can be improved. An upper limit value of Dₘₐₓ is, for example, 10 times Dₘᵢₙ. For example, the positive electrode active material is formed from two types of particles having different average particle sizes, the average particle size Dₘᵢₙ of the smaller particles is 0.1 µm~10 µm, the average particle size Dₘₐₓ of the larger particle is 10 µm-30 µm, and Dₘₐₓ and Dₘᵢₙ may be in the relationship of 2≤Dₘₐₓ/Dₘᵢₙ≤10.

At least one type among the n types of the positive electrode active materials may be formed from one primary particle, or a secondary particle formed by 2~5 primary particles being aggregated. The smaller particle is desirably a particle having a smaller number of primary particles which aggregate in this manner. For example, the positive electrode active material having Dₘᵢₙ may be such a particle having a smaller number of primary particles which aggregate.

A parameter for classifying the positive electrode active materials into n types may be, for example, composition. That is, the number of compositions of the n types of positive electrode active materials may be two or more. The positive electrode active material is, for example, a lithium-containing transition metal composite oxide. Examples of elements included in the lithium-containing transition metal composite oxide include Ni, Co, Mn, Na, K, Mg, Ca, Sr, Ba, Sc, Y, La, Ce, Pr, Nd, Sm, Eu, Gd, Tb, Dy, Ho, Er, Tm, Yb, Lu, Ge, Sn, Pb, Sc, Ti, Si, V, Cr, Fe, Cu, Zn, Ru, Rh, Re, Pd, Ir, Ag, Bi, Sb, B, Al, Ga, In, P, Zr, Hf, Nb, Mo, and W. The lithium-containing transition metal composite oxide desirably includes Ni.

A desirable example of the lithium-containing transition metal composite oxide is a composite oxide having a layered rock salt-type crystal structure, and represented by a general formula: LiNiₓM₁₋ₓO₂ (wherein M is at least one element selected from the group consisting of Al, Mn, and Co, and 0.3≤x<1.0). A composite oxide having a high content of Ni is effective in achieving a high capacity of the battery. The composition of the composite oxide can be measured using an ICP emission spectrometry device (iCAP 6300 manufactured by Thermo Fisher Scientific).

At least one type of the n types of the positive electrode active materials may include Mn. For example, an NCM-based lithium-containing transition metal composite oxide including Ni, Co, and Mn is harder than an NCA-based lithium-containing transition metal composite oxide including Ni, Co, and Al, and thus, the advantage of the low-hardness compound is more significant.

A content of the low-hardness compound in the positive electrode mixture layer is greater than 0.05 parts by mass and less than 1.00 parts by mass with respect to 100 parts by mass of the positive electrode active material. When the content of the low-hardness compound is less than or equal to 0.05 parts by mass, the advantage by the low-hardness compound is not realized. When the content of the low-hardness compound is greater than or equal to 1.00 parts by mass, the number of the electrically conductive paths is reduced due to the presence of the low-hardness compound, and the electrical resistance is increased. That is, by containing the low-hardness compound in a predetermined ratio in the positive electrode mixture layer, the electrical resistance can be suppressed. The content of the low-hardness compound in the positive electrode mixture layer is desirably 0.06 parts by mass~0.99 parts by mass with respect to 100 parts by mass of the positive electrode active material, and is more desirably 0.08 parts by mass~0.50 parts by mass.

A Mohs hardness of the low-hardness compound contained in the positive electrode mixture layer 31 is desirably less than or equal to 3. When the Mohs hardness of the low-hardness compound is less than or equal to 3, the crack of the positive electrode active material during rolling can be suppressed in a greater degree.

The low-hardness compound is, for example, talc. Talc has the Mohs hardness of 1, and is the softest mineral among inorganic minerals. Composition of talc may be represented by Mg₃Si₄O₁₀(OH)₂.

An average particle size of the low-hardness compound, before being mixed with the positive electrode active material in a production method of a positive electrode mixture layer to be described below, is, for example, 0.1 µm~5.0 µm, is desirably 0.3 µm~3.0 µm, and is more desirably 0.5 µm~2.0 µm. An average particle size of the low-hardness compound after being mixed with the positive electrode active material may be smaller than the values described above.

The positive electrode mixture layer 31 may further include a conductive agent. The conductive agent forms an electrically conductive path in the positive electrode mixture layer 31, and suppresses the electrical resistance. As the conductive agent, there may be exemplified carbon-based particles such as carbon black (CB), acetylene black (AB), Ketjenblack, graphite, carbon nanotube (CNT), graphene, graphite, or the like. These materials may be used as a single material, or two or more of these materials may be combined. A content of the conductive agent is, for example, 0.1 mass%-5.0 mass% with respect to the 100 parts by mass of the positive electrode active material.

The positive electrode mixture layer 31 may further include a binder agent. As the binder agent, there may be exemplified a fluororesin such as polytetrafluoroethylene (PTFE), polyvinylidene fluoride (PVdF), polyacrylonitrile (PAN), polyimide, an acrylic resin, polyolefin, or the like. These resins may be used in combination with a cellulose derivative such as carboxymethyl cellulose (CMC) or a salt thereof, polyethylene oxide (PEO), or the like. A content of the binder agent is, for example, 0.1 mass%-5.0 mass% with respect to 100 parts by mass of the positive electrode active material.

A production method of the positive electrode 11 will now be described. The positive electrode 11 can be produced, for example, by applying a positive electrode mixture slurry over the positive electrode current collector 30, drying the applied film, and rolling the dried film, to form the positive electrode mixture layer 31 over both surfaces of the positive electrode current collector 30. The positive electrode mixture slurry includes, for example, the positive electrode active material, the low-hardness compound, the conductive agent, and the binder agent. No particular limitation is imposed on a dispersive medium of the positive electrode mixture slurry, and, for example, N-methyl-2-pyrrolidone (NMP) may be employed. The low-hardness compound may be mixed with the positive electrode active material using a mixer or the like, before the other constituting compositions are mixed. With this configuration, it is possible to cause the low-hardness compound to interpose between the positive electrode active materials.

In the positive electrode mixture layer 31 including the low-hardness compound (present embodiment), the filling density can be increased in comparison to a positive electrode mixture layer which does not include the low-hardness compound (reference). FIG. 2 is a diagram showing a relationship between a filling density of the positive electrode mixture layer 31 and elongation of the positive electrode 11 during rolling. In the reference, when the linear pressure during the rolling is increased, the filling density can be increased without the positive electrode being elongated, until a predetermined density. However, the increase in the filling density becomes slow even when the linear pressure is increased, and ultimately, the filling density stops at the maximum filling density a, and only the positive electrode is elongated. In the present embodiment, a tendency similar to that of the reference is observed, but the filling density at which the increase in the filling density becomes slow even when the linear pressure is increased is higher than that in the reference, and a maximum filling density b thereof is higher than the maximum filling density a. A minimum linear pressure at which the maximum filling density is obtained will be hereinafter referred to as a minimum filling linear pressure.

### [Negative Electrode]

The negative electrode 12 includes a negative electrode current collector 40 and a negative electrode mixture layer 41 provided over a surface of the negative electrode current collector 40. For the negative electrode current collector 40, there may be employed a foil of metal stable within a potential range of the negative electrode 12 such as copper, a film on a surface layer of which the metal is placed, or the like. The negative electrode mixture layer 41 is desirably provided over both surfaces of the negative electrode current collector 40. The negative electrode 12 can be produced, for example, by applying a slurry of the negative electrode mixture over the negative electrode current collector 40, drying the applied film, and rolling the dried film, to form the negative electrode mixture layer 41 over both surfaces of the negative electrode current collector 40. The negative electrode mixture layer 41 includes, for example, a negative electrode active material and a binder agent.

As the negative electrode active material included in the negative electrode mixture layer 41, there may be exemplified, for example, a carbon-based active material which can reversibly occlude and release lithium ions. Examples of desirable carbon-based active materials include graphite such as natural graphite such as flake graphite, massive graphite, amorphous graphite, or the like, or an artificial graphite such as massive artificial graphite (MAG), graphitized meso-phase carbon microbeads (MCMB), or the like. Alternatively, as the negative electrode active material, there may be employed a Si-based active material formed from at least one of Si and a Si-containing compound, or the carbon-based active material and the Si-based active material may be employed in combination.

As the binder agent included in the negative electrode mixture layer 41, similar to the case of the positive electrode 11, a fluororesin, PAN, polyimide, an acrylic resin, polyolefin, or the like may be employed, but desirably, styrene-butadiene rubber (SBR) is employed. The negative electrode mixture layer 41 may further contain CMC or a salt thereof, polyacrylic acid (PAA) or a salt thereof, polyvinyl alcohol (PVA), or the like. Of these, a combinational use of SBR, CMC or a salt thereof, and PAA or a salt thereof is desirable. The negative electrode mixture layer 41 may further contain a conductive agent.

### [Separator]

For the separator 13, a porous sheet having an ion permeability and an insulating property is employed. Specific examples of the porous sheet include a microporous thin film, a woven fabric, a non-woven fabric, or the like. As a material of the separator, there may be exemplified polyethylene, polypropylene, polyolefin such as a copolymer of ethylene and α-olefin, cellulose, or the like. The separator 13 may have a single-layer structure or a layered structure. Alternatively, a heat-resistive layer including inorganic particles, or a heat-resistive layer formed from a resin having a high thermal endurance such as an aramid resin, polyimide, polyamideimide, or the like may be formed over a surface of the separator 13.

### EXAMPLES

The present disclosure will now be described in further detail with reference to Examples. The present disclosure, however, is not limited to Examples described below.

### <Example 1>

### [Production of Positive Electrode]

As a positive electrode active material, a mixture including two types of lithium-containing transition metal composite oxides having average particle sizes respectively of 17 µm and 5 µm mixed in a mass ratio of 50:50 was used. The composition of the two types of the lithium-containing transition metal composite oxides were the same, and were both NCM-based. As the low-hardness compound, talc having an average particle size of 0.6 µm was used. The positive electrode active material and talc were mixed using a mixer and with a mass ratio of 100:0.30, to obtain a mixture thereof. The mixture, acetylene black (AB), and polyvinylidene fluoride (PVDF) were mixed with a solid content mass ratio of 98.4:0.7:0.9, and, using N-methyl-2-pyrrolidone (NMP) as a dispersive medium, a positive electrode mixture slurry was prepared. Next, the positive electrode mixture slurry was applied over a positive electrode current collector formed from an aluminum foil, the applied film was dried, and the dried film was rolled with the minimum filling linear pressure which was separately measured in advance. The resulting structure was cut in a predetermined electrode size, to obtain a positive electrode.

### [Preparation of Non-Aqueous Electrolyte]

Ethylene carbonate (EC), ethylmethyl carbonate (EMC), and dimethyl carbonate (DMC) were mixed with a volume ratio of 20:5:75. Lithium hexafluorophosphate (LiPF₆) was dissolved in the mixture solvent in a concentration of 1.35 mol/liter, to prepare a non-aqueous electrolyte.

### [Production of Test Cell]

The positive electrode described above and a negative electrode formed from a lithium metal foil were placed opposing each other with a separator therebetween, to form an electrode assembly, and the electrode assembly and the non-aqueous electrolyte described above were housed in an outer housing formed using aluminum laminated sheets. Then, an opening of the outer housing was sealed, to obtain a test cell (non-aqueous electrolyte secondary battery).

### [Assessment of Direct Current Resistance (DCIR)]

Under an environment of 25°C, the test cell was charged with a constant current of 0.3C until a state of charge (SOC) of 50% was reached, and was then discharged with a constant current of 1C for 10 seconds. A value obtained by dividing a difference between an open circuit voltage (OCV) and a closed circuit voltage (CCV) at 10 seconds after the discharge by a discharge current at 10 seconds after the discharge was set as a direct current resistance (DCIR).

### <Examples 2~4, Comparative Examples 1~3>

Test cells were produced in a manner similar to Example 1 except that, in the production of the positive electrode, the average particle size and the amount of talc used were changed as shown in TABLE 1, and the test cells were assessed. TABLE 1 shows results of assessment of DCIR for Examples 1-4 and Comparative Examples 1~3. For the minimum filling linear pressure, values measured respectively for Examples and Comparative Example were used.

**[TABLE 1]**

| | LOW-HARDNESS COMPOUND | | DCIR@SOC50% [Ω] |
|---|---|---|---|
| | AVERAGE PARTICLE SIZE [µm] | CONTENT (/MASS OF POSITIVE ELECTRODE ACTIVE MATERIAL) [MASS%] | |
| EXAMPLE 1 | 0.6 | 0.30 | 3.98 |
| EXAMPLE 2 | 1.0 | 0.10 | 3.67 |
| EXAMPLE 3 | 1.0 | 0.30 | 3.58 |
| EXAMPLE 4 | 1.5 | 0.30 | 3.29 |
| COMPARATIVE EXAMPLE 1 | 1.0 | 0.05 | 5.00 |
| COMPARATIVE EXAMPLE 2 | 1.0 | 1.00 | 5.05 |
| COMPARATIVE EXAMPLE 3 | - | nil | 4.52 |

### <Example 5>

A test cell was produced in a manner similar to Example 1 except that talc having an average particle size of 1.0 µm was used, the positive electrode active material and talc were mixed using a mixer with a mass ratio of 100:0.10, to obtain a mixture thereof, and the mixture, AB, CNT, and PVDF were mixed with a solid content mass ratio of 98.0:0.7:0.4:0.9, and the test cell was assessed.

### <Example 6, Comparative Examples 4~6>

Test cells were produced in a manner similar to Example 1 except that, in the production of the positive electrode, the average particle size and the amount of talc used were changed as shown in TABLE 2, and were assessed. TABLE 2 shows results of assessment of DCIR for Examples 5 and 6 and Comparative Example 4~6. For the minimum filling linear pressure, values measured respectively for Examples and Comparative Examples were used.

**[TABLE 2]**

| | LOW-HARDNESS COMPOUND | | DCIR@SOC50% [Ω] |
|---|---|---|---|
| | AVERAGE PARTICLE SIZE [µm] | CONTENT (/MASS OF POSITIVE ELECTRODE ACTIVE MATERIAL) [MASS%] | |
| EXAMPLE 5 | 1.0 | 0.10 | 2.50 |
| EXAMPLE 6 | 1.0 | 0.30 | 2.36 |
| COMPARATIVE EXAMPLE 4 | 1.0 | 0.05 | 2.60 |
| COMPARATIVE EXAMPLE 5 | 1.0 | 1.00 | 3.00 |
| COMPARATIVE EXAMPLE 6 | - | nil | 2.59 |

As shown in TABLE 1, all of the test cells of Examples 1~4 having a predetermined amount of talc in the positive electrode mixture layer had a smaller DCIR in comparison to the test cells of Comparative Examples 1~3. As shown in TABLE 2, similar tendency was observed when CNT was used.

### REFERENCE SIGNS LIST

10 circular cylindrical battery, 11 positive electrode, 12 negative electrode, 13 separator, 14 electrode assembly, 16 outer housing can, 17 sealing assembly, 18, 19 insulating plate, 20 positive electrode lead, 21 negative electrode lead, 22 groove portion, 23 internal terminal plate, 24 lower vent member, 25 insulating member, 26 upper vent member, 27 cap, 28 gasket, 30 positive electrode current collector, 31 positive electrode mixture layer, 40 negative electrode current collector, 41 negative electrode mixture layer

## Claims

1. A positive electrode for a secondary battery, comprising:
a positive electrode current collector; and
a positive electrode mixture layer provided over a surface of the positive electrode current collector, wherein
the positive electrode mixture layer includes n types of positive electrode active materials (wherein n is an integer greater than or equal to 2), and a low-hardness compound having a lower hardness than any of the n types of the positive electrode active materials, and
a content of the low-hardness compound in the positive electrode mixture layer is greater than 0.05 parts by mass and less than 1.00 parts by mass with respect to 100 parts by mass of the n types of the positive electrode active materials.

2. The positive electrode for the secondary battery according to claim 1, wherein
a number of types of average particle sizes of the n types of the positive electrode active materials is greater than or equal to two.

3. The positive electrode for the secondary battery according to claim 2, wherein
a minimum average particle size Dₘᵢₙ of the n types of the positive electrode active materials is 0.1 µm~10 µm, and a maximum average particle size Dₘₐₓ of the n types of the positive electrode active materials is two times the Dₘᵢₙ or greater.

4. The positive electrode for the secondary battery according to any one of claims 1 to 3, wherein
at least one type among the n types of the positive electrode active materials is formed from one primary particle, or a secondary particle formed by two to five primary particles being aggregated.

5. The positive electrode for the secondary battery according to any one of claims 1 to 4, wherein
a number of types of compositions of the n types of the positive electrode active materials is greater than or equal to 2.

6. The positive electrode for the secondary battery according to any one of claims 1 to 5, wherein
a Mohs hardness of the low-hardness compound is less than or equal to 3.

7. The positive electrode for the secondary battery according to any one of claims 1 to 6, wherein
the low-hardness compound is talc.

8. The positive electrode for the secondary battery according to any one of claims 1 to 7, wherein
at least one type among the n types of the positive electrode active materials includes Mn.

9. A secondary battery comprising:
the positive electrode for the secondary battery according to any one of claims 1 to 8;
a separator;
a negative electrode for a secondary battery that opposes the positive electrode for the secondary battery with the separator therebetween; and
an electrolyte.
